# EUROPEAN PATENT APPLICATION

(11) **EP 2 455 718 A1**
(43) Date of publication of application: **23.05.2012**
(21) Application number: 10191627.8
(22) Date of filing: 18.11.2010
(51) Int. Cl.: G01D 4/00, G02F 1/167

(54) **Energy meter employing electronic-ink based display**

(71) Applicant: Saia-Burgess Controls AG, 3280 Murten (CH)
(72) Inventor: Costa, Jean-Paul, 1564 Domdidier (CH)
(74) Representative: AMMANN PATENTANWÄLTE AG BERN

(57) **Abstract**

The energy meter for measuring the amount of electrical energy consumed comprises an electrical display (11) for displaying energy information corresponding to the electrical energy consumed. The display (11) is configured to change the energy information displayed by means of energy supplied by an energy source. It is configured such that when the energy supplied by the power source is interrupted the energy information displayed remains visible.

## Description

The present invention relates to an energy meter according to the preamble of claim 1.

Energy meters are used to measure the amount of electrical energy consumed. The electrical energy is for instance drawn from the mains supply. It is known to use an electrical display in form of an LCD or LED display to display information on the energy consumed. However, such displays are to be supplied constantly with power to display the information, even if the latter does not change. If the power is interrupted, the information is not displayed anymore. Interruption may for instance occur when a tenant moves out of a rented flat and the energy supplier disconnects the flat from the mains supply.

It is an aim of the present invention to provide for an energy meter, which has an improved way of showing the energy information.

This aim is achieved by an energy meter as defined in claim 1. The display is configured such that when the energy supplied is interrupted the energy information displayed remains visible. Preferably, the display is an electronic ink display.

The further claims specify preferred embodiments of the energy meter and a use of an electrical display in a displaying part of an energy meter.

The invention is explained in the following by means of an exemplary embodiment with reference to a figure.

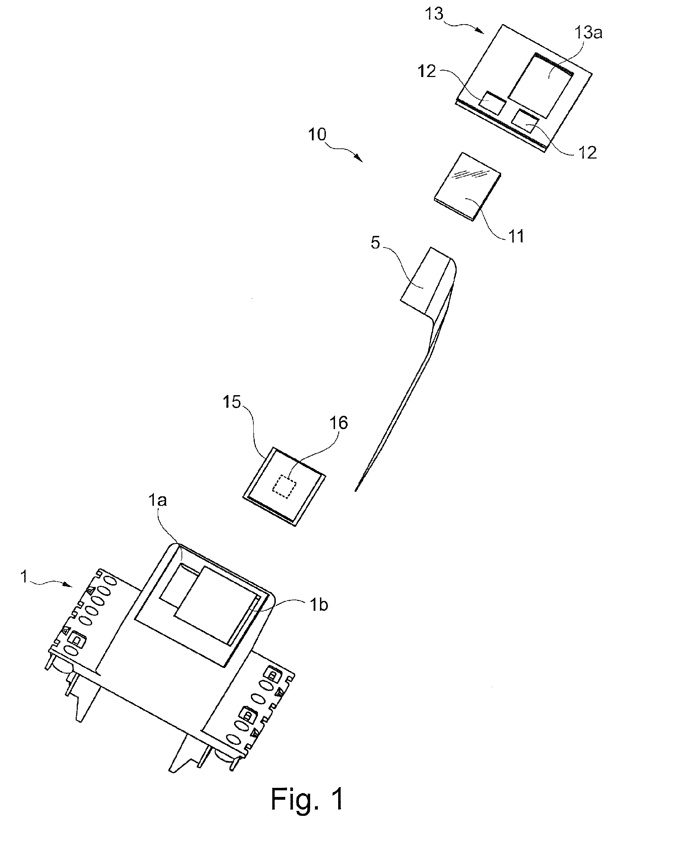

Fig. 1 shows an explosive view of the displaying part of the energy meter according to the invention.

Fig. 1 shows the displaying part of an energy meter for measuring the amount of electrical energy consumed. The energy originates e. g. from the mains supply. The energy meter comprises a housing portion 1 with a front side 1a. A display assembly 10 is attached to the front side 1a and comprises a flat cable 5, an electrical display 11 and one or more buttons 12.

The cable 5 is guided through a recess 1b built in the housing portion 1 and serves for connection to the electrical circuit, which measures the amount of electrical energy consumed and which comprises e. g. a motherboard.

The display assembly 10 comprises further a plate 13 with a window 13a. The display 11 is attached to the plate 13 such that its front side is visible through the window 13a. The back side of the display 11 is connected to a printed circuit board (PCB) 15 which carries a chip 16 and to which the cable 5 is connected to. The display 11 is fixed to the PCB 15 e. g. by means of an adhesive layer.

The chip 16 is configured to process the data received from the measuring circuit of the energy meter and to control the display 11 such that it displays energy information which corresponds to the electrical energy consumed. The energy information is displayed e. g. in digital form, i. e. in form of a number. The number may correspond e. g. to the energy consumed in the unit of kilowatt hour or Megawatt hour. The energy meter may be configured such that it can communicate with a remote reading station in order to transmit the energy information to the remote reading station. Other pieces of information, e. g. the status of the energy meter, may be displayed on the display 11 when pressing one of the buttons 12.

To change the information shown on the display 11, the display assembly 10 is supplied with energy from a power source. This energy originates from the same power source to which the energy meter is connected to measure the energy consumption.

The display assembly 10 is configured such that when the power source does not deliver energy, the energy information remains visible. Visibility is given for a period of time which lasts at least one week, at least one month or longer and/or even practically permanently.

In the present embodiment, an electronic ink display ("e-ink display") is used as a display 10. The information shown on the display 10 is made visible by reflecting the ambient light. The e-ink display is based on a reflective bistable liquid crystal technology. The state of the crystal is changed by means of a short electrical impulse. After the impulse, the status of the crystal is fixed and remains stable until the chip 16 causes the display 10 to change the information displayed.

In one embodiment the e-ink display comprises microcapsules which contain ink particles and which are held in a layer of liquid polymer. This layer is sandwiched between two arrays of electrodes, the upper of which is transparent. The two arrays are divided into pixels, each pixel being defined by a pair of electrodes situated on either side of the layer of liquid polymer. The ink particles consist of positively charged white particles and negatively charged black particles. By applying a voltage to a pair of electrodes the ink can be "turned" on and off, i. e. in dependence on the sign of the voltage, the positively or negatively charged particles move to the top of the microcapsules, giving the pixel a black or a white appearance.

In another embodiment of the e-ink display only one array of electrodes is needed.

The e-ink display has a low power consumption when changing its state and can be made very thin, such that it is flexible. The thickness may be e. g. less than 200 micrometers or less than 100 micrometers.

The display assembly 10 may further comprise an illumination mean for illuminating the display 11 (not shown), when the ambient light is not sufficient to read the information on the display 10. One of the buttons 12 may be configured for switching on the illumination mean, if required. The illumination mean may be e. g. an LED. The illumination mean is connected to the power source for the display 11 and does not operate, when no energy is available from the power source. However, as the energy information displayed on the display 11 is still visible, it can be read by using an external illumination mean, e. g. a flashlight.

Use of the display assembly described above allows the information to be displayed on the display such that in the stand-by mode, when the information is not changed, no power is needed to display the information. Thus, when no energy is available, e. g. when the energy meter is disconnected from the mains supply, the information on the display remains still visible. No backup energy source, e. g. a battery or specific capacitors, is needed.

From the preceding description, countless modifications are available to the expert without departing from the protective scope of the invention, which is defined by the claims.

## Claims

1. Energy meter for measuring the amount of electrical energy consumed, comprising an electrical display (11) for displaying energy information corresponding to the electrical energy consumed, the display (11) being configured to change the energy information displayed by means of energy supplied by an energy source, **characterized in that**
the display (11) is configured such that when the energy supplied by the power source is interrupted the energy information displayed remains visible.

2. Energy meter according to claim 1, wherein the display (11) is configured such that the energy information is made visible by reflecting ambient light.

3. Energy meter according to any one of the preceding claims, wherein the display (11) is configured such that, after interruption of the energy supplied by the power source, the energy information remains visible for a period of time which lasts at least one week, preferably at least one month, and most preferably at least three months.

4. Energy meter according to any one of the preceding claims, wherein the display is an electronic ink display (11) .

5. Energy meter according to any one of the preceding claims, wherein the energy information displayed on the display (11) comprises a number.

6. Energy meter according to any one of the preceding claims, further comprising an illumination mean for illuminating the display (11).

7. Energy meter according to claim 6, wherein the illumination mean is an LED and/or is configured to be turned on by pressing a button (12).

8. Energy meter according to any one of the preceding claims, wherein the energy meter is configured to transmit the energy information to a remote reading station.

9. Use of an electrical display (11) in a displaying part of an energy meter for measuring the amount of electrical energy consumed, the display (11) serving for displaying energy information corresponding to the electrical energy consumed, wherein the display (11) is configured to change the energy information displayed by means of energy supplied by an energy source and is configured such that when the energy supplied by the power source is interrupted the energy information displayed remains visible.

10. Use according to claim 9, wherein the display is an electronic ink display (11).
